# EUROPEAN PATENT APPLICATION

(11) **EP 1 254 751 A1**
(43) Date of publication of application: **06.11.2002**
(21) Application number: 02425268.6
(22) Date of filing: 26.04.2002
(51) Int. Cl.: B29C 33/38, B29C 33/56, B29C 51/30, B22C 7/02

(54) **Casting process for the realisation of light moulds used to produce thermoformed articles**

(30) Priority: 03.05.2001 IT MC20010049
(71) Applicant: Puma Stampi di Bisonni Umberto & C.S.N.C., 62012 Civitanova Marche (MC) (IT)
(72) Inventor: Bisonni, Umberto, 62012 Civitanova Marche (MC) (IT)
(74) Representative: Baldi, Claudio

(57) **Abstract**

The present invention relates to a casting process for the realisation of light moulds used to produce thermoformed articles.

According to the method of the invention, a plaster cast (1) reproducing a wooden model is laid on a plaster platform (2) and covered with a few millimetre thick layer of plastic material (3), on which plaster is poured to obtain a prismatic block (4) whose borders (4a) match the borders (2a) of the platform. Casting holes (4b) and vent holes (4c) are drilled in the block (4), the block (4) is separated from the platform (2) to remove the layer of plastic material (3), and repositioned to obtain a moulding cavity into which metal is cast. The metal shell obtained is mounted on a support and can be used as a tool to thermoform articles identical to the original wooden model.

## Description

The present patent application relates to a casting process for the realisation of light moulds used to produce thermoformed articles, such as footwear bottoms, to which from now on the present description will refer for convenience purposes, being it understood that the method of the invention can be used to produce moulds in general, regardless of the type of moulded item.

More precisely, the patent protection is also extended to the moulds produced with the method of the invention.

In order to highlight the novelty and originality of the invention, the description continues with reference to the technology that is commonly used to realise aluminium moulds for the production of footwear bottoms.

According to the traditional technique, a silicone rubber impression of the model, which is usually made of wood, of the part to be moulded, is obtained.

The silicone rubber impression is used as matrix die for a plaster cast that reproduces the original model perfectly.

Melted aluminium is poured in the plaster cast to obtain a prismatic metal block whose internal cavity reproduces the cavity of the plaster cast, and consequently reproduces the cavity of the original wooden model.

The aluminium block is composed of a lower matrix die and an upper cover that, once matched, hermetically close the impression.

The high weight of these moulds impairs handling, thus making assembling and disassembling operations of the mould on the press complicated and long.

In short, the handling of these moulds always requires the use of lift and transport equipment, such as lift trucks with vertically sliding forks or chains actuated by winches.

The purpose of the invention is to devise a new method for the realisation of lighter moulds in order to eliminate the aforementioned inconveniences that are due to the excessive weight of the current moulds.

According to the method of the invention, the plaster cast reproducing the wooden model is laid on a plaster platform and covered with a few millimetre thick layer of plasticine, on which plaster is poured to obtain a prismatic plaster block that overlaps the plaster platform.

Once it solidifies, the plaster block shows a central impression on the flat surface that matches the surface of the plaster platform below, which is exactly identical to the external surface of the plasticine layer that adheres to the plaster cast internally.

According to the method of the invention holes ending in the impression are drilled on the plaster block, of which some are used for metal casting and some are used for air vent during casting.

Before casting the metal, the plasticine layer is removed from the plaster cast in order to create a space with the same thickness and shape as the plasticine layer that has been removed, once that the plaster block has been repositioned on the support platform of the plaster cast.

A metal shell with the same thickness and shape as the space that surrounds the plaster cast is obtained by pouring metal into the cavity through the holes drilled on the plaster block.

This means that the internal surface of the metal shell is exactly the same as the plaster cast and therefore suitable to mould thermoformed articles identical to the original wooden model.

For major clarity the description of the process according to the present invention continues with reference to the enclosed drawings, which are intended for purposes of illustration and not in a limiting sense, whereby:

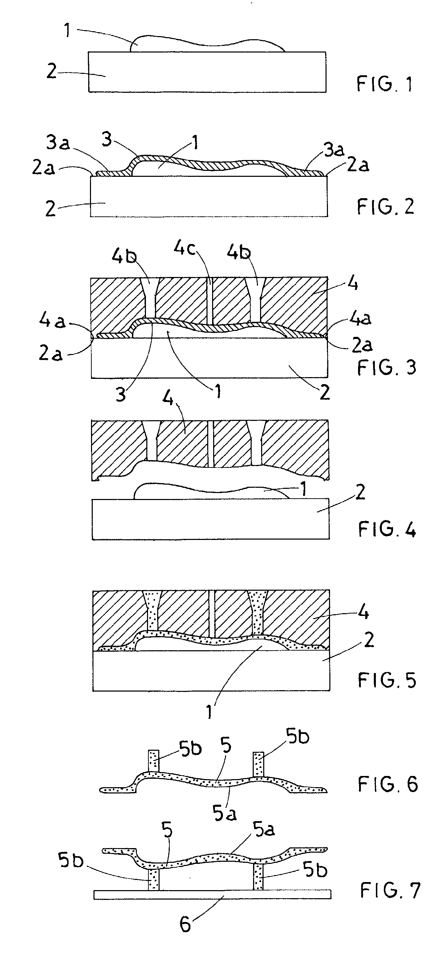

- figures 1 to 7 show the different operating phases of the method of the invention to realise a light mould for the production of thermoformed articles.

First of all, according to the method of the invention a plaster cast (1) is prepared starting from a reference model with the traditional techniques illustrated in the premises.

Once the plaster cast (1) is ready, the method of the invention provides for the following phases:
- fixing of the plaster cast (1) on a plaster platform (2), as shown in fig. 1;
- coating of the plaster cast (1) with a plasticine layer (3), whose perimeter sides are laid on the platform (2), without reaching the external borders (2a) of the platform (2), as shown in fig. 2;
- plaster casting on the plasticine layer (3) to obtain a prismatic block (4) whose external borders (4a) are exactly the same as the borders (2a) of the platform (2), as shown in fig. 3, it being provided that casting holes (4b) and vent holes (4c) are drilled on the block (4);
- detachment of the block (4) from the platform (2) and removal of the plasticine layer (3), as shown in fig. 4;
- repositioning of the block (4) on the platform (2) and metal casting through the holes (4b) of the block (4), as shown in fig. 5;
- extraction of an aluminium shell (5) whose internal surface (5a) is exactly the same as the plaster cast (1) and therefore suitable for the production of thermoformed articles identical to the original wooden model, as shown in fig. 6.

Obviously, the mass of the shell (5) is lower than an equivalent matrix die obtained with the traditional method described above.

This means that, using the same moulding material, the shell (5) is lighter and therefore easier to handle than an equivalent matrix die obtained with the traditional method described above.

Moreover, it must be noted that, thanks to the reduced mass of the shell (5), it is also possible to use different moulding materials instead of aluminium, which seemed to be the only solution possible in order to contain the weight of the mould.

This possibility should not be underestimated, since there are metals and metal alloys (such Kaym, for example) that, due to their high resistance to wear and scratch, can be more suitable than aluminium for the realisation of moulds. These materials, however, could not be used before the invention because of their high specific weight.

The shell (5) is designed to be fixed to a suitable support (6), such as the one that is diagrammatically illustrated in fig. 7.

To this end it must be noted that the risers (5b) of the shell (5) are used as fixing brackets of the shell (5) to the support (6).

Finally, it must be said that the first operation - that is the fixing of the plaster cast (1) on the plaster platform - can be eliminated by simply realising a plaster cast (1) that incorporates the plaster platform (2).

The enclosed drawings show the different operating phases for the realisation of the shell-matrix die of the mould, but it appears evident that the same method can be used to obtain the shell-cover of the mould.

## Claims

1. Process for the realisation of moulds used to produce thermoformed articles, of the type that provides for the preparation of a plaster cast (1) starting from a reference model with traditional techniques, **characterised by** the fact that it includes the following operating phases:
- fixing of the plaster cast (1) on a plaster platform (2);
- coating of the plaster cast (1) with a layer (3) of plastic material, whose perimeter sides (3a) are laid on the platform (2) without reaching the external borders (2a) of the platform (2);
- plaster casting on the layer (3) to obtain a prismatic block (4) whose external borders (4a) are exactly the same as the borders (2a) of the platform (2), it being provided that casting holes (4b) and vent holes (4c) are drilled on the block (4);
- detachment of the block (4) from the platform (2) and removal of the layer (3);
- repositioning of the block (4) on the platform (2) and metal casting through the holes (4b) of the block (4);
- extraction of a metal shell (5) whose internal surface (5a) is exactly the same as the plaster cast (1) and suitable to mould thermoformed articles identical to the original wooden model;
- fixing of the shell (5) to a support (6).

2. Process for the realisation of moulds used to produce thermoformed articles according to claim 1, **characterised by** the fact the first operation - that is the fixing of the plaster cast (1) on the plaster platform - is carried out by realising a plaster cast (1) that incorporates the plaster platform (2).

3. Mould for the production of thermoformed articles realised with the process according to the previous claims.
